## Europäisches Patentamt
## European Patent Office
## Office européen des brevets

(19)

(11) Publication number: **0 022 444**
**B1**

(12) **EUROPEAN PATENT SPECIFICATION**

(45) Date of publication of patent specification: **12.10.83**

(51) Int. Cl.³: **G 01 N 27/00**

(21) Application number: **79301865.6**

(22) Date of filing: **12.09.79**

(54) Improvements in and relating to the detection of particles in a gaseous medium.

(30) Priority: **04.07.79 GB 7923287**

(43) Date of publication of application:
**21.01.81 Bulletin 81/3**

(45) Publication of the grant of the patent:
**12.10.83 Bulletin 83/41**

(84) Designated Contracting States:
**BE DE FR IT NL SE**

(56) References cited:
**FR - A - 2 225 797**
**FR - A - 2 243 432**
**FR - A - 2 244 982**
**US - A - 3 653 253**
**US - A - 3 895 912**

(73) Proprietor: **GRAVINER LIMITED**
**Sword House Totteridge Road**
**High Wycombe Buckinghamshire (GB)**

(72) Inventor: **Davies, David Henry John**
**5, Grayling Close**
**Marlow Buckinghamshire (GB)**
Inventor: **Nguyen, Van Thuan**
**4 Blantern Road**
**Higher Tinnerton, Clwyd (GB)**
Inventor: **Powell, Brian David**
**16 Farmers Close Cox Green**
**Maidenhead Berkshire (GB)**

(74) Representative: **Foster, David Martyn et al,**
**Mathisen, Macara & Co. Lyon House Lyon Road**
**Harrow Middlesex HA1 2ET (GB)**

Courier Press, Leamington Spa, England

Improvements in and relating to the detection of particles in a gaseous medium

The invention relates to apparatus for detecting particles in a gaseous medium, comprising a device which mechanically oscillates when electrically energised and which changes its frequency of oscillation in response to the deposition of the said particles on a surface of it, and a detecting circuit for detecting the said frequency or change in frequency to enable the presence or absence of the particles to be detected, the said surface being the surface of a coating.

Apparatus of this general form is shown, for example, in US—A—3653253 and in FR—A—2225797.

With such apparatus, the particles in order to be detected, must remain on the surface of the oscillating device in order to affect its frequency of oscillation, and the two prior Specifications referred to above mention the application to the said surface of a coating to enhance the adhesion of the particles to the surface, US—A—3653253 specifically mentioning glycerine and vacuum grease and FR—A—2225797 mentioning the use of a sticky coating.

However, another problem which can arise with such apparatus is the effect of contamination on the surface of the oscillating device. If this contamination is allowed to build up unchecked, it will eventually stop the device oscillating properly. US—A—3653253, mentioned above, and FR—A—2243432 describe how this problem can be dealt with by cleaning the surface of the device periodically.

However, it will be understood that the two features referred to above, that is, the use of a sticky coating on the oscillating device to enhance the collection of the particles to be detected and the cleaning of the surface of the device periodically to remove contamination, act somewhat in opposition. First, the use of a sticky coating may increase the risk of contamination. Secondly, cleaning is made more difficult by the presence of the sticky coating, and in any case effective cleaning may remove the sticky coating which then has to be re-applied.

The present invention is accordingly directed to dealing with the problem presented by this conflict.

Accordingly, apparatus of the form set out above is characterised in that the coating is a coating of polytetrafluoroethylene (PTFE).

The Applicants have found that PTFE facilitates the removal of contamination from the surface of the oscillating device without simultaneously degrading the ability of the device to reliably retain particles.

The particles to be detected may be of various different types, such as spray or mist or particles of smoke. In one specific example, to be described in more detail below, the particles are particles of an oil mist or spray originating, for example, in the atmosphere in the engine room of a ship owing to a leak or fracture in a fuel or lubrication pipe. In such an application, it is found that the PTFE coating helps retention of the oil mist particles or droplets on the surface of the oscillating device during detection of changes in its frequency. If the PTFE coating is omitted, it is found that the droplets tend to spread out to provide a general wetting of the device surface, preventing later arriving droplets from being retained. However, although the PTFE helps the droplets stay on the surface of the oscillating device during detection of changes in its frequency, it also allows the surface to be much more effectively cleaned than would be the case if the coating were omitted: the description to follow shows how cleaning may be carried out by an air jet.

Apparatus for detecting oil mist and embodying the invention will now be described, by way of example only, with reference to the accompanying diagrammatic drawings in which:

Figure 1 is a diagrammatic cross-section through one form of the apparatus;

Figure 2 is a diagrammatic section on the line II—II of Fig. 1;

Figure 3 is a circuit diagram of the apparatus;

Figure 4 is a diagrammatic cross-section through another form of the apparatus; and

Figure 5 is a diagrammatic cross-section through part of an air jet used in the apparatus of Fig. 4.

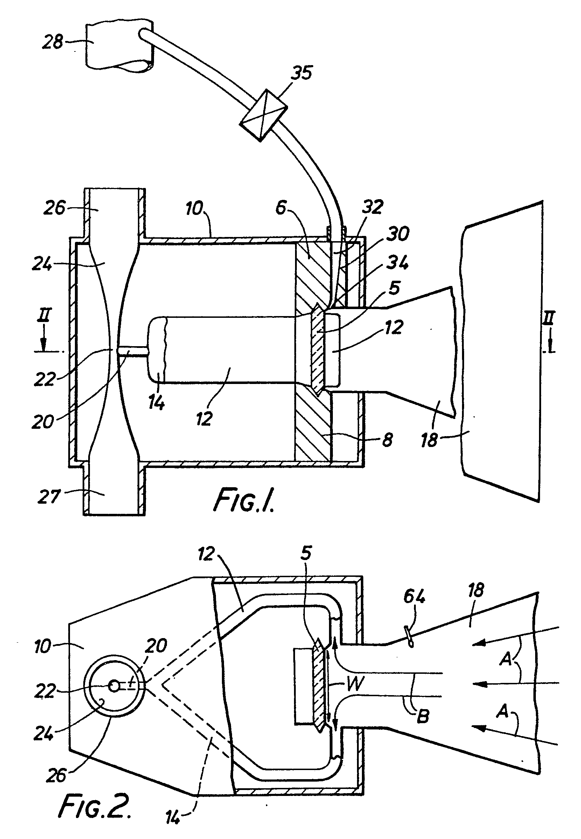

As shown in Fig. 1, the apparatus comprises a piece of quartz crystal 5 which may, for example, be of the order of 15 mm diameter with a thickness of about 2 mm and is mounted between supports 6 and 8 in which it may be held suitably. The structure comprising the crystal and the supports is mounted within a housing 10 defining air passages 12 and 14. At one end, the passages 12 and 14 connect with a converging air inlet 18. At their opposite ends, the cross-section of the air passages 12 and 14 is reduced and narrowed down to an air exit 20 which leads into the throat 22 of a venturi tube 24. The latter has an air inlet 26 and an air exit 27. The inlet 26 is connected to a supply of air under pressure via a pipe 28.

The support 6 is modified by the provision of an extension 30 defining an air passage 32. The latter terminates in a linearly shaped narrow air exit slot 34. The slot 34 extends substantially across the width (W — see Fig. 2) of the crystal 5. The opposite end of the air passage 32 is led away to the air inlet pipe 28 via an electrically operated valve 35.

The surface of the crystal 5 is coated with polytetrafluoroethylene (PTFE) which may be VYDAX (Trade Mark) or GP1 (Trade Mark).

Two electrodes (not shown in Figs. 1 and 2) are connected to the surface of the crystal 5.

The crystal is preferably an AT cut crystal operating in the thickness-shear oscillating mode.

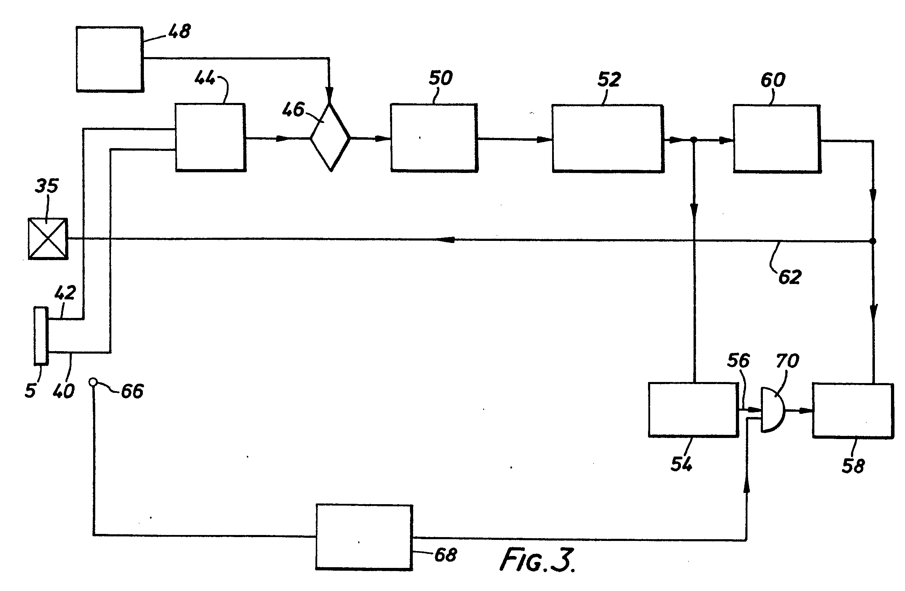

As shown in Fig. 3, the two electrodes 40 and 42 on the crystal 5 are connected to an oscillator circuit 44 whose output frequency is fed into one input of a mixer 46. The other input of the mixer 46 is fed with the output of a reference oscillator 48, and a filter 50 selects the lower of the two sidebands at the output of the mixer.

The selected sideband is then fed into a frequency to voltage converter 52 which produces an output voltage dependent on the frequency of the selected sideband. This voltage is fed into a rate circuit 54 which measures the rate of change of the voltage from the unit 52. The rate circuit 54 includes means defining a reference rate of change, and when the actual rate of change of the voltage is in excess of the reference rate of change (indicating that the frequency of the oscillator 44 is changing at more than a predetermined rate), an output is produced on a line 56 which activates an alarm unit 58.

The output voltage from the converter 52 is also fed into a trigger circuit 60 which is triggered when the actual level of voltage from the converter 52 rises above a predetermined level (corresponding to a drop in frequency). When the unit 60 is triggered in this way and after a delay of some minutes, it inhibits operation of the alarm unit 58 and also, by means of a line 62, it opens the electrically operated valve 35 (Fig. 1).

The operation of the apparatus will now be described in more detail.

In operation, the crystal 5, supported as shown in Figs. 1 and 2 within the housing 10, is mounted within the space to be monitored which may, for example, be adjacent the engine of a ship where the presence of oil mist is to be detected. Air under pressure is then fed from the air inlet pipe 28 into and through the venturi tube 24 and out through the exit 27, thus causing a decrease of pressure at the throat 22. This decrease of pressure causes ambient air from the engine room to be drawn in through the inlet 18 in the direction of the arrow A. The air flow tends to follow the arrows A and B and enters the passages 12 and 14 and then out via the exit 20 and the air outlet 27.

The apparatus is mounted so that the air drawn in through the passage 18 is representative of the air adjacent the engine (if desired, means could be provided for successively sampling the air in different parts of the engine room and feeding the samples in turn into the inlet 18).

Initially, it will be assumed that the atmosphere is free of oil mist or similar pollution.

When the circuit (Fig. 3) is electrically energised, the oscillator 44 is controlled to oscillate at a frequency which is determined by the crystal 5. In one specific example, the nominal frequency may be, say, 1 MHz. The reference oscillator 48 oscillates at a fixed reference frequency differing by, say, 2 KHz from the nominal frequency of the oscillator 33, and therefore the lower sideband output from the filter 50 has a nominal frequency of 2 KHz.

The converter 52 therefore feeds a corresponding voltage to the rate detector 54 and the trigger circuit 60.

It will now be assumed that owing to a fault in the engine, an oil mist starts to develop and this oil mist is picked up by the air flow flowing into the inlet 18. When this happens, the oil mist particles or droplets are deposited on the surface of the crystal 5 and left there by the air as it then flows on and around the crystal and out through the exit 20. This deposition of oil mist particles on the surface of the crystal 5 represents, of course, additional mass on the crystal and alters its frequency of oscillation. There is thus a resultant change in the output voltage of the converter 52. When the contamination is such that this voltage is changing at more than the predetermined rate established by the reference means within the rate detector 54, the latter produces an output on line 56 which activates the alarm 58.

In use, the surface of the crystal 5 may gradually be contaminated with dust and other extraneous particles and this will reduce the efficiency of operation of the apparatus, resulting in a general lowering of sensitivity of the apparatus. When the voltage from converter 52 rises above a predetermined level (corresponding to a fall in crystal frequency), the unit 60 is triggered and, after the predetermined delay, opens the valve 35 (Fig. 1). This causes air under pressure to be fed through the air passage 32 (Fig. 1) on the support 6 and out in the form of an "air knife" through the slot 34. This longitudinal fan-shaped jet of air cleans the contaminating particles off the surface of the crystal 5 and restores its original efficiency. The predetermined delay prevents the air knife from cleaning off oil mist before its effect has been detected by the circuit 54.

The PTFE coating is found to help retention of the oil mist particles or droplets on the crystal surface during detection of the change in crystal frequency. If the PTFE coating is omitted, it is found that the droplets tend to spread out to provide a general wetting of the crystal surface, preventing later arriving droplets from being retained. However, although the PTFE helps the droplets to stay on the crystal surface during detection of the change in crystal frequency, it also allows the crystal surface to be much more effectively cleaned by the air jet then would be the case if the coating were omitted.

When the unit 60 is triggered, the alarm 58 is inhibited from operation.

When the cleaning process has restored the output voltage on the converter 52 to below the predetermined level, the trigger 60 is automatically reset, thus closing the valve 35 (Fig. 1) and restoring the alarm unit 58 to its operative condition.

An air flow detector 64 may be positioned within the air inlet 18 (Fig. 1) to produce an electrical output signal on a line 66 in the event of the air flow becoming reduced below a predetermined level (owing to failure of the air supply or blockage or similar cause). This electrical signal activates a detector circuit 68 which operates the alarm 58 through an OR gate 70.

The flow detector 64 could, for example, be in the form of a thermistor supplied with a current which, in the absence of at least a predetermined air flow across it, is sufficient to heat it to such temperature as produces a measurable change in its resistance and hence a resultant change in output signal.

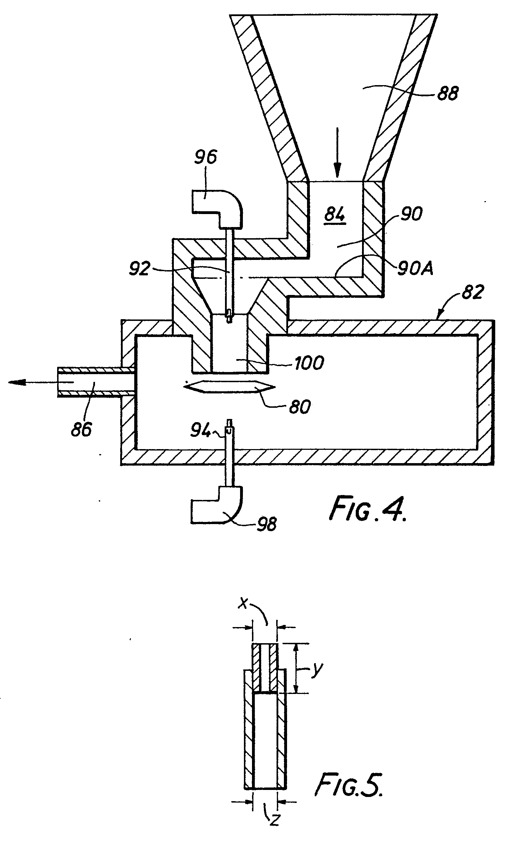

Fig. 4 shows a modified form of the apparatus which may be advantageous in certain cases.

As shown in Fig. 4, this form of the apparatus comprises a piece of quartz crystal 80 which may, for example, be of the order of 15 mm square with a thickness of about 2 mm and is mounted between supports (not shown in Fig. 4) in which it may be held suitably. The structure comprising the crystal and the supports is mounted within a housing 82 having air inlet and exit passages 84 and 86. At one end, the passage 84 connects with a converging air inlet 88. The passage 86 is connected to a pump which draws air in through the inlet 88, through the housing 82 and across the surfaces of the crystal, and thence out through the exit 86.

The passage 84 has a right angled bend 90 for a purpose to be explained.

Two air jets 92 and 94 are mounted to direct air jets to the front and back surfaces of the crystal 80, the jets being directed substantially perpendicular to the crystal surfaces.

Fig. 5 shows to an enlarged scale one form which each of the jets 92, 94 may advantageously take. Each jet may be fed with air at about 60 pounds per square inch. Each jet is switched on and off by an electrically controlled valve 96, 98.

The electrical circuity of the apparatus shown in Figs. 4 and 5 can take the same form as that shown in Fig. 3 (except that the line 62 would be connected to the valves 96 and 98).

The operation of the apparatus of Figs. 4 and 5 is generally the same as that of Figs. 1 and 2 and will not be explained in detail.

The purpose of the right angled bend 90 is to help prevent large particles from reaching the crystal surface and causing false results. Such large particles strike the surface 90A and are retained there, while the smaller particles continue along the passage 84 to the crystal. The shape and size of the passage 84, and the rate of flow of the air along the passage, are adjusted in accordance with the approximate size of particles to be detected, so as to ensure that excessively large particles are retained on the impact surface 90A. When smaller particles are to be detected, the rate of flow of air through the inlet and exit passages 82, 84 is higher, the throat 100 in front of the crystal is made narrower and crystal is placed nearer the throat.

The crystal surfaces (both back and front) are coated with PTFE and with the same advantages as described above.

It is found that the provision of an air cleaning jet acting on the back surface of the crystal, in addition to the air jet acting on the front surface, is advantageous because otherwise the back surface tends to become contaminated. It is not practicable to protect the back surface of the crystal from contamination because any such protection is found to have the effect of preventing free oscillation of the crystal.

For both forms of the apparatus, it may be advantageous to arrange for a small amount of a solvent, such as methylene chloride, to be added to the air cleaning jet(s). This helps the jets to remove the oil particles.

It is found that the rate of change of frequency of the crystal in response to the particles or droplets to be detected, is reduced as the crystal surface becomes more contaminated. It may therefore be advantageous to arrange for the alarm 58 to be activated not merely when the rate detector 54 detects a change in frequency above the predetermined rate but only when this is detected immediately after a cleaning operation has taken place.

The circuitry can also be modified so that the rate of operation of the cleaning jet(s) is itself used as a measure of presence of oil mist — instead of the rate of change of crystal frequency.

Various modifications of the apparatus may be made. For example, the circuit may be different from that shown in Fig. 4 and may not necessarily involve detection of the rate of change of the frequency of oscillation of the crystal 5.

If desired, the reference oscillator 48 may be a crystal-controlled oscillator. The crystal which controls its frequency oscillator may be an enclosed crystal. Instead, it could be mounted so that its oscillation frequency would be affected by general contamination in the atmosphere of the room being monitored by the crystal 5 but so as not to be specifically affected by an oil mist. Therefore, by comparing the frequencies of the two oscillators, the effect of general contamination in the atmosphere could be offset or eliminated.

It will be appreciated that the apparatus is by no means limited to use for detecting oil mist but may be used, after suitable modification if necessary, for detecting other particulate substances such as smoke or oil spray for example.

## Claims

1. Apparatus for detecting particles in a gaseous medium, comprising a device (5, 80) which mechanically oscillates when electrically energised and which changes its frequency of oscillation in response to the deposition of the said particles on a surface of it, and a detecting circuit (44—60) for detecting the said frequency or change in frequency to enable the presence or absence of the particles to be detected, the said surface being the surface of a coating, characterised in that the coating is a coating of polytetrafluoroethylene (PTFE).

2. Apparatus according to claim 1, characterised in that the device (5, 80) comprises an oscillatable crystal to at least one of the faces of which the said coating is applied.

3. Apparatus according to claim 2, characterised in that the crystal (5, 80) also has a coating of PTFE on its face opposite to the said one face.

4. Apparatus according to claim 1, 2 or 3, characterised by a cleaning device (28, 34, 35; 92, 94) operative to remove contamination from the surface of the or each said coating.

5. Apparatus according to claim 4, characterised in that the cleaning device includes a jet arrangement (34, 92, 94) operative to direct a jet of fluid onto the or each said surface.

6. Apparatus according to claim 5, characterised in that the jet arrangement comprises an air knife (34).

7. Apparatus according to claim 5, characterised in that the jet arrangement comprises a nozzle (92, 94) for directing a jet of air onto the or each said surface and in a direction substantially perpendicular to the surface.

8. Apparatus according to any one of claims 4 to 7, characterised by a control device (52, 60) in the detecting circuit and which is responsive to the level of contamination on the or each surface whereby to operate the cleaning device (28, 34, 35; 92, 94) when contamination exceeds a predetermined level.

9. Apparatus according to claim 8, characterised in that the control device comprises a circuit (52, 60) responsive to the frequency of oscillation of the oscillating device (5, 80) whereby to produce the said control signal when the frequency has fallen by a predetermined amount from a datum value.

10. Apparatus according to any one of claims 4 to 9, characterised by a circuit operative to determine when the detecting circuit (44—60) produces a warning output immediately after operation of the cleaning device (28, 34, 35; 92, 94).

11. Apparatus according to any one of claims 4 to 10, characterised in that the detecting circuit comprises a circuit responsive to the rate of operation of the cleaning device (28, 34, 35; 92, 94).

12. Apparatus according to any one of claims 4 to 11, characterised in that the cleaning device (28, 34, 35; 92, 94) includes a device for applying to the surface of the or each coating a small amount of a solvent selected so as to be a solvent for the type of contamination expected.

13. Apparatus according to any preceding claim, characterised by a gas flow passage (18, 88) arranged to direct the gaseous medium towards, so as to impact on, the said or one said surface.

14. Apparatus according to claim 13, characterised in that the said passage (81) includes an abrupt change of direction (90, 90A) whereby to tend to retain particles in the gaseous medium above a predetermined size and to prevent their impacting on the or one said surface.

## Patentansprüche

1. Vorrichtung zum Aufspüren von Partikeln in einem gasförmigen Medium, mit einer durch elektrische Erregung in mechanische Schwingungen versetzbaren Einrichtung (5, 80), deren Schwingungsfrequenz sich in Abhängigkeit von der Ablagerung der genannten Partikel auf einer ihrer Oberflächen ändert, und mit einer Detektorschaltung (44—60) zum Erfassen der Frequenz oder der Frequenzänderung und damit zum Erfassen des Vorhandenseins oder der Abwesenheit der Partikel, wobei die genannte Oberfläche die Oberfläche einer Beschichtung ist, dadurch gekennzeichnet, daß die Beschichtung eine Beschichtung aus Polytetrafluoräthylen (PTFE) ist.

2. Vorrichtung nach Anspruch 1, dadurch gekennzeichnet, daß die Einrichtung (5, 80) einen in Schwingungen versetzbaren Kristall aufweist, auf wenigstens eine von dessen Oberflächen die Beschichtung aufgetragen ist.

3. Vorrichtung nach Anspruch 2, dadurch gekennzeichnet, daß der Kristall (5, 80) auch auf der der einen Oberfläche gegenüberliegenden Oberfläche eine Beschichtung aus PTFE hat.

4. Vorrichtung nach Anspruch 1, 2 oder 3, gekennzeichnet durch eine Reinigungseinrichtung (28, 34, 35; 92, 94) zum Entfernen von Verunreinigungen von der Oberfläche der oder jeder Beschichtung.

5. Vorrichtung nach Anspruch 4, dadurch gekennzeichnet, daß die Reinigungseinrichtung eine Düsenanordnung (34, 92, 94) aufweist, mittels welcher ein Strahl eines Strömungsmittels auf die oder jede Oberfläche richtbar ist.

6. Vorrichtung nach Anspruch 5, dadurch gekennzeichnet, daß die Düsenanordnung eine Flachstrahl-Luftdüse (34) aufweist.

7. Vorrichtung nach Anspruch 5, dadurch gekennzeichnet, daß die Düsenanordnung ein Mundstück (92, 94) aufweist, mittels dessen ein Luftstrahl im wesentlichen lotrecht auf die oder jede Oberfläche richtbar ist.

8. Vorrichtung nach einem der Ansprüche 4 bis 7, gekennzeichnet durch eine in der Detektorschaltung vorhandene Steuereinrichtung (52, 60), welche auf den Grad der Verschmutzung auf der oder jeder Oberfläche anspricht, um die Reinigungseinrichtung (28, 34, 35; 92, 94) zu betätigen, wenn die Verschmutzung einen vorbestimmten Grad übersteigt.

9. Vorrichtung nach Anspruch 8, dadurch gekennzeichnet, daß die Steuereinrichtung eine auf die Schwingungsfrequenz der in Schwingungen versetzbaren Einrichtung ansprechende Schaltungsanordnung (52, 60) aufweist, mittels welcher ein Steuersignal erzeugbar ist, wenn die Frequenz um einen vorbestimmten Betrag von einem gegebenen Wert angefallen ist.

10. Vorrichtung nach einem der Ansprüche 4 bis 9, gekennzeichnet durch eine Schaltungsanordnung, mittels welcher die Erzeugung eines Warnsignals durch die Detektorschaltung (44—60) unmittelbar nach Betätigung der Reinigungseinrichtung (28, 34, 35; 92, 94) erfaßbar ist.

11. Vorrichtung nach einem der Ansprüche 4 bis 10, dadurch gekennzeichnet, daß die Detektorschaltung eine auf die Betätigungshäufigkeit der Reinigungseinrichtung (28, 34, 35; 92, 94) ansprechende Schaltungsanordnung enthält.

12. Vorrichtung nach einem der Ansprüche 4 bis 11, dadurch gekennzeichnet, daß die Reinigungseinrichtung (28, 34, 35; 92, 94) eine Einrichtung zum Aufbringen einer kleinen Menge eines Lösungsmittels auf die Oberfläche der oder jeder Beschichtung aufweist, wobei das Lösungsmittel im Hinblick auf die zu erwartende Verunreinigung gewählt ist.

13. Vorrichtung nach einem der vorstehenden Ansprüche, gekennzeichnet durch einen Strömungsdurchlaß (18, 88) mittels dessen der Strom des gasförmigen Mediums so ausrichtbar ist, daß er die Oberfläche oder eine der Oberflächen beaufschlagt.

14. Vorrichtung nach Anspruch 13, dadurch gekennzeichnet, daß der Durchlaß (81) eine plötzliche Richtungsänderung (90, 90A) beinhaltet, durch welche in dem gasförmigen Medium enthaltene Partikel oberhalb einer vorbestimmten Größe im wesentlichen zurückgehalten und an einem Aufschlag auf der Oberfläche oder einer der Oberflächen gehindert werden.

**Revendications**

1. Appareil pour détecter des particules dans un milieu gazeux, comprenant un dispositif (5, 80) qui oscille mécaniquement lorsqu'il est excité électriquement et qui change sa fréquence d'oscillation en réponse au dépôt de particules sur une surface de ce dispositif, ainsi qu'un circuit de détection (44—60) pour détecter la fréquence d'oscillation ou un changement de la fréquence d'oscillation en vue de la détection de la présence ou de l'absence de particules, la surface étant celle d'un revêtement, caractérisé en ce que le revêtement est en polytétrafluoroéthylène (PTFE).

2. Appareil selon la revendication 1, caractérisé en ce que le dispositif (5, 80) est un cristal oscillant, sur au moins l'une des faces duquel est appliqué le revêtement.

3. Appareil selon la revendication 2, caractérisé en ce que le cristal (5, 80) porte également un revêtement de PTFE sur sa face opposée.

4. Appareil selon la revendication 1, 2 ou 3, caractérisé en ce qu'il comprend un dispositif de nettoyage (28, 34, 35; 92, 94) pour enlever de la surface du revêtement, ou de chaque revêtement, les matières qui s'y sont déposées.

5. Appareil selon la revendication 4, caractérisé en ce que le dispositif de nettoyage comporte un système à jet (34, 92, 94) pour diriger un jet de fluide sur la surface ou chaque surface.

6. Appareil selon la revendication 5, caractérisé en ce que le système à jet produit une lame d'air (34).

7. Appareil selon la revendication 5, caractérisé en ce que le système à jet comporte une buse (92, 94) pour diriger un jet d'air sur la surface ou sur chaque surface et dans une direction sensiblement perpendiculaire à la surface.

8. Appareil selon l'une quelconque des revendications 4 à 7, caractérisé en ce que le circuit de détection comporte un dispositif de commande (52, 60) qui est sensible au niveau de contamination ou d'encrassement de la surface ou de chaque surface et qui est destiné à faire fonctionner le dispositif de nettoyage (28, 34, 35; 92, 94) lorsque la contamination dépasse un niveau prédéterminé.

9. Appareil selon la revendication 8, caractérisé en ce que le dispositif de commande est un circuit (52, 60) qui est sensible à la fréquence d'oscillation du dispositif oscillant (5, 80) et qui est destiné à produire un signal de commande lorsque la fréquence a diminué d'une quantité prédéterminée par rapport à une valeur donnée.

10. Appareil selon l'une quelconque des revendication 4 à 9, caractérisé en ce qu'il comprend un circuit pour déterminer quand le circuit de détection (44—60) produit un signal de sortie d'avertissement immédiatement après le fonctionnement du dispositif de nettoyage (28, 34, 35; 92, 94).

11. Appareil selon l'une quelconque des revendications 4 à 10, caractérisé en ce que le circuit de détection comporte un circuit sensible à la fréquence de fonctionnement du dispositif de nettoyage (28, 34, 35; 92, 94).

12. Appareil selon l'une quelconque des revendications 4 à 11, caractérisé en ce que le dispositif de nettoyage (28, 34, 35; 92, 94) comporte un dispositif pour appliquer à la surface du revêtement ou de chaque revêtement une petite quantité d'un solvant choisi pour faciliter l'enlèvement de la matière ou des matières de contamination prévue(s) de la surface ou de chaque surface.

13. Appareil selon l'une quelconque des revendications précédentes, caractérisé en ce qu'il présente un passage d'écoulement de gaz (18, 88) agencé pour diriger le milieu gazeux vers la surface ou vers chaque surface de manière à venir la frapper.

14. Appareil selon la revendication 13, caractérisé en ce que le passage (84) comporte un brusque changement de direction (90, 90A) pour retenir des particules au-dessus d'une taille prédéterminée dans le milieu gazeux et pour empêcher qu'elles viennent frapper la surface ou chaque surface.

0 022 444

FIG.1.

FIG.2.

1

FIG.3.

*Fig.4.*

*Fig.5.*